# EUROPEAN PATENT APPLICATION

(11) **EP 4 693 638 A2**
(43) Date of publication of application: **11.02.2026**
(21) Application number: 25194054.0
(22) Date of filing: 05.08.2025
(51) Int. Cl.: H01M 50/15, H01M 50/184, H01M 50/342

(54) **CAP ASSEMBLY AND SECONDARY BATTERY INCLUDING SAME**

(30) Priority: 08.08.2024 KR 20240106035
(71) Applicant: SAMSUNG SDI CO., LTD., Yongin-si, Gyeonggi-do 17084 (KR)
(72) Inventor: LEE, Changmu, 17084 Yongin-si, Gyeonggi-do (KR)
(74) Representative: Gulde & Partner

(57) **Abstract**

A secondary battery includes a cap plate coupled to an open upper end of a case, the cap plate having a first through-hole, and an insulating plate beneath the cap plate, the insulating plate having a second through-hole aligned with the first through-hole, wherein the insulating plate includes a body portion having the second through-hole, a sidewall extending upward along an edge of the body portion, and a bending portion connecting the body portion and the sidewall.

## Description

### BACKGROUND

### 1. Field

Embodiments relate to a cap assembly and a secondary battery including the same.

### 2. Description of Related Art

A secondary battery is a rechargeable battery that can be charged and discharged multiple times. These secondary batteries are commonly employed in various applications, including electronic devices (e.g., smartphones, laptops, tablets, and the like), electric vehicles, solar power generation systems, and emergency power supplies. In particular, lithium-ion batteries are widely used in various electronic devices and electric vehicles due to their high energy density and excellent charge/discharge efficiency.

Secondary batteries can be classified, based on a shape of a case thereof, into cylindrical secondary batteries, prismatic secondary batteries, and pouch-type secondary batteries. A prismatic secondary battery has a structure in which an electrode assembly is accommodated in a prismatic metal can. The electrode assembly is inserted into the prismatic metal can, and the can is sealed by welding a cap plate.

The above information disclosed in this Background section is for enhancement of understanding of the background of the present disclosure, and therefore, it may contain information that does not constitute related (or prior) art.

### SUMMARY

However, the technical problem to be solved by the present disclosure is not limited to the above problem, and other problems not mentioned herein, and aspects and features of the present disclosure that would address such problems, will be clearly understood by those skilled in the art from the description of the present disclosure below.

Embodiments include a cap assembly, including a cap plate coupled to an open upper end of a case, the cap plate having a first through-hole, and an insulating plate beneath the cap plate, the insulating plate having a second through-hole aligned with the first through-hole, wherein the insulating plate includes a body portion having the second through-hole, a sidewall extending upward along an edge of the body portion, and a bending portion connecting the body portion and the sidewall.

The cap plate may include a groove at a lower surface thereof, and the groove may be between the first through-hole and a welding portion of the case.

The groove may include a first groove and a second groove, the first groove and the second groove being along a longitudinal direction of the first through-hole, the welding portion of the case may extend in a longitudinal direction of the cap plate, and each of the first groove and the second groove is in a region between the first through-hole and the welding portion of the case.

In a short-side direction of the cap plate, the groove may overlap at least partially with the first through-hole.

A center of the groove and a center of the first through-hole may be aligned on a same straight line in a short-side direction of the insulating plate.

The cap assembly may further include a step portion at an outer side of the bending portion of the insulating plate.

In a short-side direction of the insulating plate, the step portion may overlap at least partially with the second through-hole.

A center of the step portion and a center of the second through-hole may be aligned on the same straight line in the short-side direction of the insulating plate.

The bending portion may include a first bending surface on an inner surface of the insulating plate, and a second bending surface offset from the first bending surface by a thickness of the insulating plate, the second bending surface being on the step portion.

The bending portion may further include a third bending surface on an outermost surface of the insulating plate.

A radius of curvature of the first bending surface may be equal to or greater than 0.5 mm.

A radius of curvature of each of the second bending surface and the third bending surface may be equal to or greater than 2 mm.

The insulating plate may further include a rib connecting the body portion and the sidewall.

Embodiments include a secondary battery, the secondary battery including an electrode assembly including a first electrode plate, a second electrode plate, and a separator, a case that accommodates the electrode assembly, the case having an open upper end, a cap plate that is coupled to the open upper end of the case, the cap plate including a first through-hole, and an insulating plate beneath the cap plate, the insulating plate including a second through-hole aligned with the first through-hole, wherein the insulating plate includes a body portion having the second through-hole, a sidewall extending upward along an edge of the body portion, and a bending portion connecting the body portion and a side wall, and wherein the bending portion has a radius of curvature.

The cap plate may include a groove at a lower surface of the cap plate, and the groove may be between the first through-hole and a welding portion of the case.

The groove may include a first groove and a second groove, the first groove and the second groove may be along a longitudinal direction of the first through-hole, the welding portion of the case may be in a longitudinal direction of the cap plate, and each of the first groove and the second groove may be in a region between the first through-hole and the welding portion of the case.

The bending portion of the insulating plate may be at an outer side thereof, and the step portion may overlap at least partially with the second through-hole in a short-side direction of the insulating plate.

The bending portion may include a first bending surface on an inner surface of the insulating plate, and a second bending surface offset from the first bending surface by a thickness of the insulating plate, the second bending surface being on a step portion, and a third bending surface on an outermost surface of the insulating plate.

A radius of curvature of the first bending surface may be equal to or greater than 0.5 mm.

A radius of curvature of each of the second bending surface and the third bending surface may be equal to or greater than 2 mm.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating an example of a battery cell according to one or more embodiments of the present disclosure.
FIG. 2 is a perspective view illustrating an example of an interior of a battery cell according to one or more embodiments of the present disclosure.
FIG. 3 is an exploded perspective view of an example of a cap assembly according to one or more embodiments of the present disclosure.
FIGS. 4A and 4B illustrate an example of a lower surface of a cap plate according to one or more embodiments of the present disclosure.
FIG. 5 a rear view illustrating an example of the lower surface of the cap plate of FIG. 4B.
FIG. 6 is a cross-sectional view taken along line A-A' of FIG. 3.
FIG. 7 illustrates an example in which grooves cause an upward bending of a cap plate according to one or more embodiments of the present disclosure.
FIGS. 8A and 8B illustrate an example of an insulating plate according to one or more embodiments of the present disclosure.
FIG. 9 illustrates an example of a lower surface of an insulating plate according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified. The terms used in the present specification are for describing embodiments of the present disclosure and are not intended to limit the present disclosure.

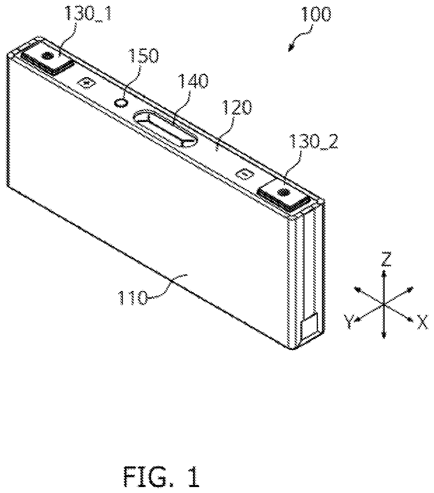

FIG. 1 is a perspective view illustrating an example of a battery cell 100 according to one or more embodiments of the present disclosure.

Referring to FIG. 1, the battery cell 100 may include at least one electrode assembly which is wound or stacked with a separator. The separator is an insulator interposed between a positive electrode and a negative electrode. The battery cell 100 includes a case 110 accommodating the electrode assembly and a cap plate 120 coupled to an open end of the case 110. The battery cell 100 shown in FIG. 1 may be a type of secondary battery.

Each of the positive electrode and the negative electrode may include a current collector made. The current collector may be made of a thin metal foil having a coated portion on which an active material is coated and an uncoated portion on which an active material is not coated. The positive electrode and the negative electrode may be wound after interposing the separator therebetween. However, the present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the secondary battery and may be made of a conductive metal, such as aluminum, an aluminum alloy, or a nickel-plated steel. In addition, the case 110 may provide a space in which the electrode assembly is accommodated.

In the illustrated example of FIG. 1, the case 110 is a prismatic case, and the battery cell 100 is a prismatic battery cell. However, the battery cell 100 may be a battery cell of any shape such as a prismatic shape, a cylindrical shape, a pouch shape, or the like.

Each of the case 110 and the cap plate 120 may be made of a conductive material. In one or more embodiments, an upper end of the case 110 may be open, and the cap plate 120 may seal the open upper end of the case 110.

A positive terminal 130_1, electrically connected to the positive electrode, and a negative terminal 130_2, electrically connected to the negative electrode, may be coupled to the cap plate 120. For example, the positive and negative terminals 130_1 and 130_2 may be installed to protrude outward through the cap plate 120.

In one or more embodiments, a vent 140 may be formed on at least one surface of the battery cell 100. For instance, in the illustrated example of FIG. 1, the vent 140 may be formed at an upper surface of the battery cell 100, e.g., on the cap plate 120. The vent 140 may be configured to open in response to an internal pressure exceeding a predetermined threshold pressure in the battery cell 100.

In this case, the threshold pressure may be set differently depending on the applications, materials, purpose, and other factors of the battery. For example, a relatively high threshold pressure may be set for a battery in which the internal pressure of the case 110 is maintained at a higher pressure on average compared to other applications due to short charge-discharge cycles during use. In another example, a relatively high threshold pressure may be set for a battery that is manufactured with materials and/or designs that have relatively high heat resistance and/or pressure resistance. In contrast, a relatively low threshold pressure may be set for a battery that is manufactured with materials and/or designs that have relatively low heat resistance and/or pressure resistance. Additionally, the vent 140 may be configured to open in response to an internal temperature exceeding a predetermined threshold temperature. With such a configuration, the vent 140 may prevent explosion of the battery cell 100 or prevent a chain exothermic reaction of other battery cells arranged adjacent to the battery cell 100.

In one or more embodiments, the cap plate 120 may include an electrolyte injection hole 150. For example, the electrolyte injection hole 150 may be a through-hole formed through the cap plate 120, and may be formed such that the electrolyte may be injected into the case 110 after the cap plate 120 is coupled and sealed to the opening of the case 110. The electrolyte injection hole 150 may be sealed with a sealing member after the electrolyte is injected.

The battery cell 100 may be a lithium (Li) battery cell, a sodium (Na) battery cell, or the like. However, the battery cell 100 may include any battery cell capable of repeatedly providing electricity by being charged and discharged. In one or more embodiments, in a case where the battery cell 100 is the Li battery cell, the battery cell 100 may be used in electric vehicles (EVs) due to its excellent lifespan and high-rate capability. For example, the battery cell 100 may be used in hybrid vehicles such as plug-in hybrid electric vehicles (PHEVs). Additionally, the Li battery cell may be used in fields requiring a large amount of power storage. For example, the battery cell 100 may be used in electric bicycles, power tools, and similar applications.

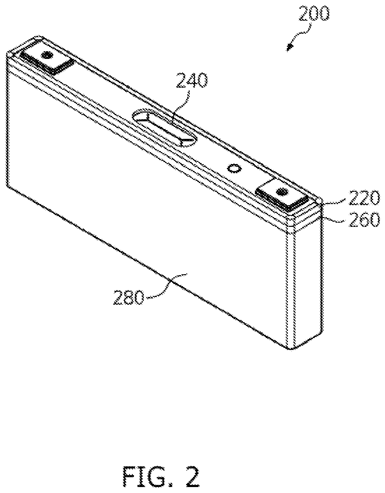

FIG. 2 is a perspective view illustrating another example of a battery cell 200 according to one or more embodiments of the present disclosure.

FIG. 2 illustrates a battery cell 200. Referring to FIG. 2, the battery cell 200 may include a cap plate 220 coupled with the open upper end of the case, an insulating plate 260 disposed beneath the cap plate 220, and an electrode assembly 280 accommodated in the case.

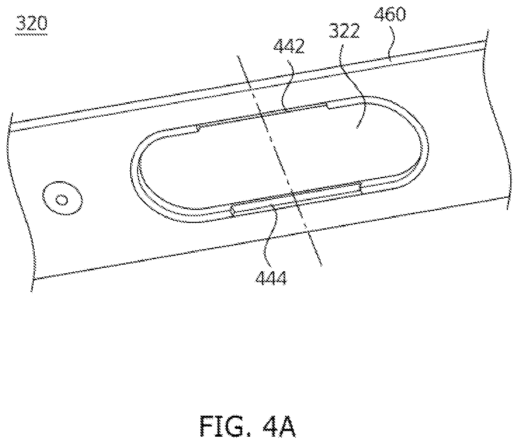

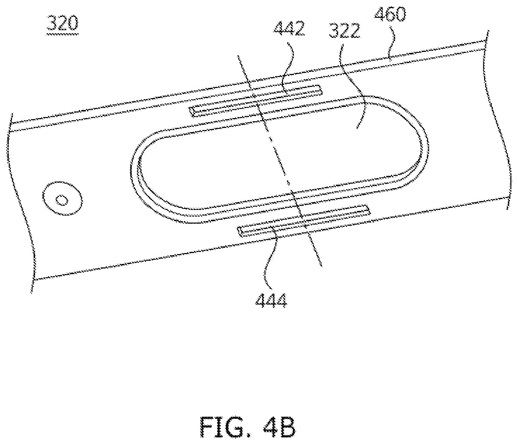

The cap plate 220 may include a first through-hole 240 formed at a position corresponding to the vent. The cap plate 220 may include a groove on a lower surface thereof. The groove formed in the cap plate 220 may be configured to direct the bending of the cap plate 220 upward prior to the rupture of the vent. The structure of the groove in the cap plate 220 will be discussed in detail with reference to FIGS. 4A and 4B.

The insulating plate 260 may be sized corresponding to that of the cap plate 220. In one or more embodiments, the insulating plate 260 may be a flat plate having an overall rectangular shape. The insulating plate 260 may have a second through-hole formed at a position corresponding to (e.g., aligned with) the first through-hole 240 in the cap plate 220. The insulating plate 260 may be disposed to be in close contact with the lower surface of the cap plate 220. The insulating plate 260 may serve to insulate the cap plate 220 from the electrode assembly 280.

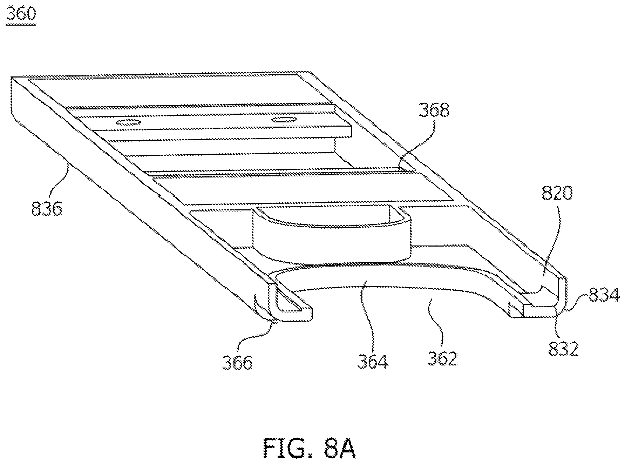

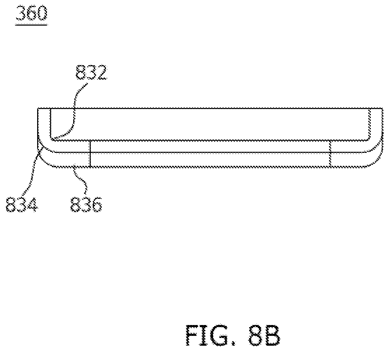

In a case where the secondary battery is impacted, the insulating plate 260 may be broken, causing the electrode assembly to be broken as well. To prevent internal short circuits in the electrode assembly, the insulating plate 260 may include a bending portion formed at an edge of a lower surface thereof. The bending portion may achieve a cushioning effect reducing a crush risk. The detailed structure of the bending portion formed in the insulating plate 260 will be described in further detail with reference to FIGS. 8A and 8B.

The electrode assembly 280 may be accommodated in the case. The electrode assembly 280 may be provided by winding or stacking a laminate including a first electrode plate (not shown), a separator (not shown), and a second electrode plate (not shown) each formed as a thin plate or film. In a case where the electrode assembly 280 is a wound laminate, the axis of the winding thereof may be parallel to the longitudinal direction of the case. In addition, the electrode assembly 280 may be a stack type instead of being a wound type, but the shape of the electrode assembly 280 of the present disclosure is not limited thereto. In addition, the electrode assembly 280 may be a Z stack electrode assembly in which a positive electrode plate and a negative electrode plate are provided on opposite sides of the separator bent as a Z stack. In addition, one or more electrode assemblies 280 may be stacked so that the long sides thereof are adjacent to each other so as to be received in the case. The present disclosure is not intended to limit the number of electrode assemblies 280. In the electrode assembly 280, the first electrode plate may act as a positive electrode, and the second electrode plate may act as a negative electrode. The reverse is also possible.

The first electrode plate may be formed by applying a first electrode active material, such as graphite or carbon, to a first electrode collector plate formed of a metal foil of, for example, copper (Cu), a Cu alloy, nickel (Ni), or a Ni alloy, and may include a first electrode tab (or a first uncoated portion) which is a region to which the first electrode active material is not applied. The first electrode tab may be a path for current flow between the first electrode plate and the first subplate assembly 310. In some examples, the first electrode tab may be formed by previously cutting the first electrode plate so that the first electrode tab protrudes from a first side in a case where the first electrode plate is fabricated, and may protrude further from the first side than the separator without additional cutting.

The second electrode plate is formed by applying a second electrode active material, such as a transition metal oxide, to a second electrode collector plate formed of a metal foil of, for example, Al or an Al alloy, and may include a second electrode tab (or a second uncoated portion) which is a region to which the second electrode active material is not applied. The second electrode tab may be a path for current flow between the second electrode plate and the second subplate assembly 410. In some examples, the second electrode tab may be formed by previously cutting the second electrode plate so that the second electrode tab protrudes from a second side in a case where the second electrode plate is fabricated, and may protrude further from the second side than the separator without additional cutting.

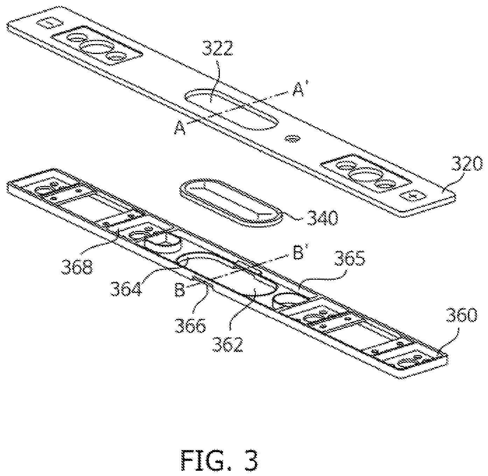

FIG. 3 is an exploded perspective view of an example of a cap assembly according to one or more embodiments of the present disclosure. The cap assembly (e.g., the battery cap assembly) may be part of a secondary battery.

The cap assembly may include a cap plate 320 and an insulating plate 360. The cap assembly may further include a vent 340. The cap assembly may be coupled to a case of a secondary battery. In one or more embodiments, the cap plate 320 may be disposed to seal an opening of the case and may be formed of the same material as the case (e.g., a conductive material). The cap plate 320 may be coupled to the case by welding. The cap plate 320 includes a first through-hole 322. The vent 340 may be installed in the first through-hole 322 of the cap plate 320. The vent 340 may include a notch that allows the vent 340 to open at a predetermined pressure.

The insulating plate 360 may be sized corresponding to that of the cap plate 320. The insulating plate 360 is positioned beneath the cap plate 320. The insulating plate 360 includes a second through-hole 362. The second through-hole 362 of the insulating plate 360 may be formed at a position corresponding to (e.g., aligned with) the first through-hole 322 of the cap plate 320.

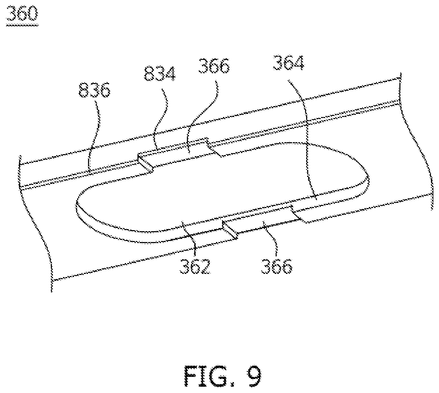

The insulating plate 360 includes a body portion 364 having the second through-hole 362, a sidewall 365 formed to extend upward along an edge of the body portion 364, and a bending portion connecting the body portion 364 and the sidewall 365. Therefore, when an impact is applied to the secondary battery, the risk of impact can be reduced, lowering the load and sharpness intensity applied to the electrode assembly. A detailed structure of the bending portion will be described in more detail with reference to FIGS. 8 and 9.

A step portion 366 may be formed at a lower surface of the insulating plate 360. For example, the step portion 366 may be formed at an outer side of the bending portion of the insulating plate 360. The step portion 366 may be formed along the longitudinal direction of the second through-hole 362.

The step portion 366 may be formed to at least partially overlap with the second through-hole 362 in the short-side direction of the insulating plate 360. In the short-side direction of the insulating plate 360, the center of the step portion 366 and the center of the second through-hole 362 may not be aligned on the same straight line. For example, the step portion 366 may be formed at the outer side of the bending portion of the insulating plate 360 at a position away from the center of the second through-hole 362, closer to one end of the second through-hole 362. In this instance, the step portion 366 may be formed to overlap at least partially with the second through-hole 362 in the short-side direction of the insulating plate 360. In other embodiments, as illustrated in FIG. 3, the step portion 366 may be formed such that the center of the second through-hole 362 and the center of the step portion 366 are aligned on the same straight line (e.g., line B-B') in the short-side direction of the insulating plate 360.

The center of the step portion 366 may be aligned on the same straight line, in the short-side direction of the insulating plate 360, with the centers of grooves 442 and 444 that are formed as recesses on a lower surface of the cap plate 320 (see FIG. 4A and 4B). By forming the step portion 366 and the grooves 442 and 444 in this manner, additional damage to the secondary battery during the rupture of the cap plate 320 and/or vent can be prevented.

The insulating plate 360 may include a rib 368 connecting the body portion 364 and the sidewall 365. The rib 368 may be formed to prevent bending of the insulating plate 360 and enhance the rigidity of the insulating plate 360. Further, a plurality of ribs 368 may be provided.

FIGS. 4A and 4B illustrate an example of a lower surface of a cap plate according to one or more embodiments of the present disclosure.

Grooves 442 and 444 may be formed at the lower surface of the cap plate 320. Therefore, when an impact is applied to the secondary battery, the cap plate 320 can be bent upward, thereby preventing damage to the separator of the electrode assembly. The grooves 442 and 444 may be formed at the lower surface of the cap plate 320 to guide (cause) the bending of the cap plate 320 at the grooves 442 and 444, for example, during the rupture of the vent or when an impact is applied to the secondary battery. Upon the rupture of the vent or when an impact is applied to the secondary battery, the grooves 442 and 444 may cause the cap plate 320 to bend in an upward direction of the cap plate 320. The upward bending of the cap plate 320 may prevent damage to the separator of the electrode assembly.

FIG. 4A illustrates an example in which each of the grooves 442 and 444 is formed in proximity to the first through-hole 322 according to one or more embodiments of the present disclosure. The grooves 442 and 444 may be formed as recesses on the lower surface of the cap plate 320.

The grooves 442 and 444 may include a first groove 442 and a second groove 444. Each of the first groove 442 and the second groove 444 may be formed between the first through-hole 322 and a case welding portion 460 (e.g. side surface of the cap plate 320). The case welding portion 460 may be formed along a long-side direction (longitudinal direction) of the cap plate 320. The case welding portion 460 may serve to couple the cap plate 320 and the case, and may correspond to a thickness surface or a side surface of the cap plate 320.

Each of the first groove 442 and the second groove 444 may be formed along the longitudinal direction of the first through-hole 322 or the longitudinal direction of the cap plate 320. In the short-side direction of the cap plate 320, each of the first groove 442 and the second groove 444 may be formed at a position overlapping with the first through-hole 322. In the short-side direction of the cap plate 320, the centers of the first groove 442 and the second groove 444 may not be aligned on the same straight line with the center of the first through-hole 322. For example, each of the first groove 442 and the second groove 444 may be formed at a position away from the center of the first through-hole 322, closer to one end of the first through-hole 322. In this instance, each of the first groove 442 and the second groove 444 may be formed at positions overlapping with the first through-hole 322 in the short-side direction of the cap plate 320. In other embodiments, as illustrated in FIG. 4A, the centers of the first groove 442 and the second groove 444 may be aligned on the same straight line with the center of the first through-hole 322.

Each of the first groove 442 and the second groove 444 may be formed to have a thickness smaller than a thickness of the cap plate 320. In the illustrated example of FIG. 4A, each of the grooves 442 and 444 has a rectangular shape, but other shapes are possible as well.

FIG. 4B illustrates an example in which each of the grooves 442 and 444 is formed to be spaced apart from the first through-hole 332 according to another embodiment of the present disclosure. The grooves 442 and 444 may be formed as recesses on the lower surface of the cap plate 320.

The grooves 442 and 444 may include the first groove 442 and the second groove 444. Each of the first groove 442 and the second groove 444 may be formed between the first through-hole 322 and the case welding portion 460. The case welding portion 460 (e.g. side surface of the cap plate 320) may be formed along the longitudinal direction of the cap plate 320. The case welding portion 460 may serve to couple the cap plate 320 and the case, and may correspond to the thickness surface or the side surface of the cap plate 320.

Each of the first groove 442 and the second groove 444 may be formed along the longitudinal direction of the first through-hole 322 or the longitudinal direction of the cap plate 320. In the short-side direction of the cap plate 320, each of the first groove 442 and the second groove 444 may be formed at a position overlapping with the first through-hole 322. In one or more embodiments, in the short-side direction of the cap plate 320, the centers of the first groove 442 and the second groove 444 may not be aligned on the same straight line with the center of the first through-hole 322. For example, each of the first groove 442 and the second groove 444 may be formed at a position away from the center of the first through-hole 322, closer to one end of the first through-hole 322. In this instance, each of the first groove 442 and the second groove 444 may be formed at positions overlapping with the first through-hole 322 in the short-side direction of the cap plate 320. In other embodiments, as illustrated in FIG. 4B, the centers of the first groove 442 and the second groove 444 may be aligned on the same straight line with the center of the first through-hole 322.

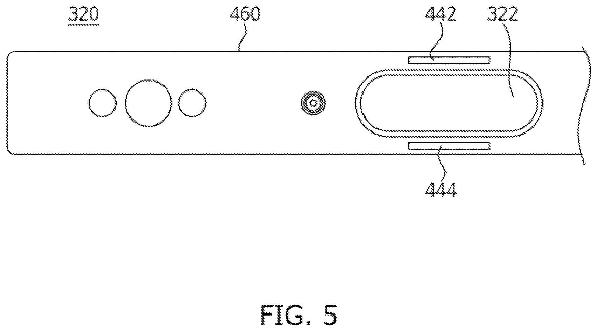

FIG. 5 illustrates an example of the lower surface of the cap plate 320 of FIG. 4B.

As shown in FIG. 5, the grooves 442 and 444 may be formed at the lower surface of the cap plate 320.

The grooves 442 and 444 may include the first groove 442 and the second groove 444. Each of the first groove 442 and the second groove 444 may be spaced apart from the first through-hole 322 while the first through-hole 332 is positioned between the first groove 442 and the second groove 444. Each of the first groove 442 and the second groove 444 may be disposed between the first through-hole 322 and the side surface or case welding portion 460 of the cap plate 320. The first groove 442 and the second groove 444 may be positioned such that the centers of the first groove 442 and the second groove 444 are aligned on the same straight line with the center of the first through-hole 322 in the short-side direction of the cap plate 320.

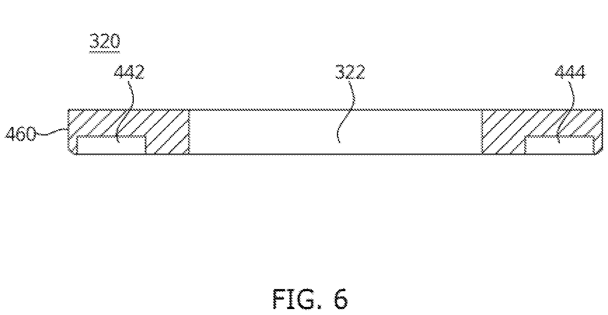

FIG. 6 is a cross-sectional view taken along line A-A' of FIG. 3.

The cap plate 320 may include the grooves 442 and 444 positioned on the opposite sides of the first through-hole 322. The grooves 442 and 444 may include the first groove 442 and the second groove 444. The grooves 442 and 444 may be formed as recesses in the cap plate. Each of the first groove 442 and the second groove 444 may be formed to have a thickness smaller than the thickness of the cap plate 320. Each of the first groove 442 and the second groove 444 may be positioned between the first through-hole 322 and the case welding portion 460 (or side surface) of the cap plate 320. The case welding portion 460 may be a portion that is welded to couple the case with the cap plate 320. Therefore, the grooves 442 and 444 may be arranged so as not to overlap with the case welding portion 460.

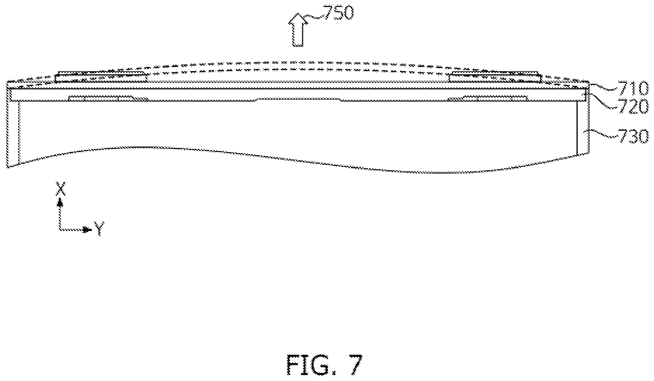

FIG. 7 illustrates an example in which grooves cause an upward bending of a cap plate according to one or more embodiments of the present disclosure.

For instance, in a case where an external impact is applied to the secondary battery in the y-axis direction, the vent may rupture. Due to the external impact, a cap plate 710 may be bent. The bending of the cap plate 710 may be guided in an upward (or x-axis) direction 750 by the grooves (e.g. the grooves 442 and/or 444) formed at the lower surface of the cap plate 710. In one or more embodiments, the dotted lines shown in FIG. 7 indicates the cap plate 710 in the position of upward bending. In the event that the cap plate 710 is bent in the upward direction 750, the cap plate 710 does not apply pressure onto the insulating plate, which may prevent an insulating plate 720 from compressing an electrode assembly 730. By preventing the insulating plate 720 from compressing the electrode assembly 730, the risk of damage to the separator caused by the cap plate 710 can be avoided.

FIGS. 8A and 8B illustrate an example of the insulating plate 360 according to one or more embodiments of the present disclosure.

FIG. 8A shows a perspective cross-sectional view taken along B-B' of FIG. 3. The second through-hole 362 of the insulating plate 360 may be formed at a position corresponding to the first through-hole 322 of the cap plate 320. The body portion 364 may have an overall plate shape. The second through-hole 362 may be formed in the body portion 364. A sidewall 820 may be formed to extend upward along the edge of the body portion 364. The body portion 364 and the sidewall 820 may be connected by a bending portion. The step portion 366 may be formed at the bending portion of the insulating plate 360.

The bending portion may include a first bending surface 832, a second bending surface 834, and a third bending surface 836. The first bending surface 832 may be formed on an inner surface of the insulating plate 360. The first bending surface 832 may be formed by structurally connecting the body portion 364 and the side wall 820 in the inner side of the insulating plate 360. The first bending surface 832 may have a radius of curvature of 0.5 mm or more.

The second bending surface 834 may be formed offset from the first bending surface 832 by a thickness of the insulating plate 360. The second bending surface 834 may be formed on an outer surface of the insulating plate 360. For example, the second bending surface 834 may be formed on the step portion 366 (that is, the second bending surface 834 may form a part of the step portion 366), and the second bending surface 834 may form a part of the outer surface of the insulating plate 360. The second bending surface 834 may have a radius of curvature of 2 mm or more. The third bending surface 836 may be formed on the outermost surface of the insulating plate 360. The third bending surface 836 may have a radius of curvature of 2 mm or more.

The insulating plate 360 may include a rib 368. The rib 368 may structurally connect the body portion 364 and the sidewall 820. The rib 368 may be formed to prevent bending and enhance the strength of the insulating plate 360. The insulating plate 360 may include a plurality of ribs 368.

FIG. 8B is a cross-sectional view taken along line B-B' of FIG. 3. The first bending surface 832 may be formed on the inner surface of the insulating plate 360. The second bending surface 834 may be formed offset from the first bending surface 832 by the thickness of the insulating plate 360 and may be formed on the outer surface of the insulating plate 360. The second bending surface 834 may have a radius of curvature of 2 mm or more. The third bending surface 836 may be formed on the outermost surface of the insulating plate 360. The third bending surface 836 may have a radius of curvature of 2 mm or more.

FIG. 9 illustrates an example of a lower surface of an insulating plate according to one or more embodiments of the present disclosure.

The second through-hole 362 of the insulating plate 360 may be formed at a position corresponding to (e.g., aligned with) the first through-hole 322 of the cap plate 320. The step portion 366 may be formed at the lower surface of the insulating plate 360. The step portion 366 may contact the second through-hole 362.

In the short-side direction of the insulating plate 360, the center of the step portion 366 and the center of the second through-hole 362 may be aligned on the same straight line. On the lower surface of the insulating plate 360, the second bending surface 834 and the third bending surface 836 may be formed.

According to various embodiments of the present disclosure, grooves are formed at the lower surface of the cap plate. Therefore, when an impact is applied to the secondary battery, the cap plate can be bent upward, thereby preventing damage to the separator of the electrode assembly.

According to various embodiments of the present disclosure, the bending portion is formed at the lower surface of the insulating plate. Therefore, when an impact is applied to the secondary battery, the risk of impact can be reduced, lowering the load and sharpness intensity applied to the electrode assembly.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery cap assembly, comprising:
a cap plate (320) coupleable to an open upper end of a case (110), the cap plate (320) having a first through-hole (332); and
an insulating plate (360) beneath the cap plate (320), the insulating plate (360) having a second through-hole (362) aligned with the first through-hole (322),
wherein the insulating plate (360) comprises:
a body portion (364) having the second through-hole (362),
a sidewall (365) extending upward along an edge of the body portion (364), and
a bending portion connecting the body portion (364) and the sidewall (365).

2. The battery cap assembly as claimed in claim 1, wherein the bending portion is formed at an edge of a lower surface of the insulating plate (360).

3. The battery cap assembly as claimed in any one of the preceding claims 1 to 2, wherein:
the cap plate (320) includes a groove (442, 444) at a lower surface thereof, and
the groove (442, 444) is between the first through-hole (322) and a side surface of the cap plate (320).

4. The battery cap assembly as claimed in any one of the preceding claims 2, wherein:
the groove (442, 444) comprises a first groove (442) and a second groove (444),
the first groove (442) and the second groove (444) are along a longitudinal direction of the first through-hole (322),
the welding portion (460) of the case (110) extends in a longitudinal direction of the cap plate (320), and
each of the first groove (442) and the second groove (444) is in a region between the first through-hole (322) and the side surface of the cap plate (320).

5. The battery cap assembly as claimed in any one of the preceding claims 3 to 4, wherein the side surface forms a case welding portion (460) to couple the cap plate (320) with the open upper end of the case (110).

6. The battery cap assembly as claimed in any one of the preceding claims 3 to 5, wherein, in a short-side direction of the cap plate (320), the groove (442, 444) overlaps at least partially with the first through-hole (322).

7. The battery cap assembly as claimed in claim 6, wherein a center of the groove (442, 444) and a center of the first through-hole (322) are aligned on a same straight line in a short-side direction of the insulating plate (360).

8. The battery cap assembly as claimed in any one of the preceding claims 1 to 7, wherein the insulating plate (360) includes a rib (368) connecting the body portion (364) and the sidewall (365).

9. The battery cap assembly as claimed in any one of the preceding claims 1 to 8, further comprising a step portion (366) at an outer side of the bending portion of the insulating plate (360).

10. The battery cap assembly as claimed in claim 9, wherein, in a short-side direction (750) of the insulating plate (360), the step portion (366) overlaps at least partially with the second through-hole (362).

11. The battery cap assembly as claimed in claim 10, wherein a center of the step portion (366) and a center of the second through-hole (362) are aligned on the same straight line in the short-side direction of the insulating plate (360).

12. The battery cap assembly as claimed in any one of the preceding claims 9 to 11, wherein the bending portion comprises:
a first bending surface (832) on an inner surface of the insulating plate (360), and
a second bending surface (834) offset from the first bending surface (832) by a thickness of the insulating plate (360), the second bending surface (834) being on the step portion (366).

13. The battery cap assembly as claimed in claim 12, wherein the bending portion further comprises a third bending surface (836) on an outermost surface of the insulating plate (360)

14. The battery cap assembly as claimed in any one of the preceding claims 1 to 13, wherein a vent (340) is installed in the first through-hole (322) of the cap plate (320).

15. A secondary battery, comprising:
an electrode assembly (280) comprising a first electrode plate, a second electrode plate, and a separator;
a case (110) that accommodates the electrode assembly (280), the case 110 having an open upper end;
the battery cap assembly as claimed in any one of the preceding claims 1 to 14, wherein the cap plate (120) of the battery cap assembly is coupled to the open upper end of the case (110).
